(19) **Europäisches Patentamt / European Patent Office / Office européen des brevets**

(11) **EP 3 292 377 B1**

(12) **FASCICULE DE BREVET EUROPEEN**

(45) Date de publication et mention
de la délivrance du brevet:
**07.10.2020 Bulletin 2020/41**

(21) Numéro de dépôt: **16726357.3**

(22) Date de dépôt: **03.05.2016**

(51) Int Cl.:
*G01C 21/34* (2006.01)　　*G05D 1/00* (2006.01)
*G05D 1/02* (2020.01)　　*G06Q 10/04* (2012.01)

(86) Numéro de dépôt international:
**PCT/FR2016/051039**

(87) Numéro de publication internationale:
**WO 2016/177963 (10.11.2016 Gazette 2016/45)**

(54) **PROCÉDÉ, PROGRAMME D'ORDINATEUR ET SYSTÈME POUR LA COMMANDE D'UN DÉPLACEMENT D'UN AGENT NAVIGANT DANS UN ENVIRONNEMENT ORGANISÉ EN RÉSEAU**

VERFAHREN, COMPUTERPROGRAMM UND SYSTEM ZUR STEUERUNG EINER BEWEGUNG EINES SICH BEWEGENDEN AGENTS IN EINER VERNETZTEN UMGEBUNG

METHOD, COMPUTER PROGRAM AND SYSTEM FOR CONTROLLING A MOVEMENT OF A MOVING AGENT WITHIN A NETWORKED ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2015 FR 1553991**

(43) Date de publication de la demande:
**14.03.2018 Bulletin 2018/11**

(73) Titulaire: **Commissariat à l'Énergie Atomique et aux Énergies Alternatives**
**75015 Paris (FR)**

(72) Inventeurs:
• **MAYRAN DE CHAMISSO, Fabrice**
**77140 Nemours (FR)**
• **AUPETIT, Michaël**
**92800 Puteaux (FR)**
• **SOULIER, Laurent**
**92160 Antony (FR)**

(74) Mandataire: **Bonnet, Michel**
**Cabinet Bonnet**
**93, rue Réaumur**
**75002 Paris (FR)**

(56) Documents cités:
• **De Chamisso et al: "Exploratory digraph navigation using A*", International Joint Conference on Artificial Intelligence (IJCAI), vol. 2015-January,2015 XP002755855, Extrait de l'Internet: URL:http://www.scopus.com/record/display.uri?eid=2-s2.0-84949758596&origin=inward&txGid=0# [extrait le 2016-03-23] & FABRICE MAYRAN DE CHAMISSO ET AL: "Exploratory Digraph Navigation Using A*", PROCEEDINGS OF THE 24TH INTERNATIONAL CONFERENCE ON ARTIFICIAL INTELLIGENCE (IJCAI 2015), 25 juillet 2015 (2015-07-25), pages 1624-1630, XP055260508, ISBN: 978-1-57735-738-4**
• **ARGAMON-ENGELSON S ET AL: "INTERLEAVED VERSUS A PRIORIEXPLORATION FOR REPEATED NAVIGATION IN APARTIALLY-KNOWN GRAPH", INTERNATIONAL JOURNAL OF PATTERN RECOGNITION AND ARTIFICIAL INTELLIGENCE (IJPRAI), WORLD SCIENTIFIC PUBLISHING, SI, vol. 13, no. 7, 1 novembre 1999 (1999-11-01), pages 963-986, XP000873357, ISSN: 0218-0014, DOI: 10.1142/S0218001499000537**

- **GIFFORD K K ET AL: "INCORPORATING TERRAIN UNCERTAINTIES IN AUTONOMOUS VEHICLE PATH PLANNING", PROCEEDINGS OF THE 1996 IEEE/RSJ INTERNATIONAL CONFERENCE ON ROBOTS AND SYSTEMS (IROS). ROBOTIC INTELLIGENCE INTERACTING WITH SYNAMIC WORLDS. OSAKA, NOV. 4 - 8, 1996; [PROCEEDINGS OF THE IEEE/RSJ INTERNATIONAL CONFERENCE ON ROBOTS AND SYSTEMS (IROS)], 4 novembre 1996 (1996-11-04), pages 1134-1140, XP000774017, ISBN: 978-0-7803-3214-0**

- **ARIEL FELNER ET AL: "PHA*: Finding the Shortest Path with A* in An Unknown Physical Environment", JOURNAL OF ARTIICIAL INTELLIGENCE RESEARCH, vol. 21, 1 janvier 2004 (2004-01-01), pages 631-670, XP055260350, cité dans la demande**

**Description**

La présente invention concerne un procédé de commande d'un déplacement d'un agent navigant dans un environnement organisé en un réseau de nœuds et de liens entre les nœuds pour un guidage de l'agent navigant entre un point de départ et un point d'arrivée de ce réseau.

Elle s'applique notamment pour la commande d'un automate, par exemple un robot, se déplaçant physiquement dans un environnement bi- ou tridimensionnel dans lequel un trajet le plus efficace possible, au sens d'une fonction de coût librement choisie, est recherché entre le point de départ et le point d'arrivée.

Elle s'applique également pour la transmission d'un paquet de données numériques dans un réseau de transmission de données, entre un émetteur et un destinataire de ce paquet de données.

Elle s'applique également pour la transmission d'une requête dans une base de données sémantique, entre un émetteur et un destinataire de cette requête.

Un procédé bien connu et fondamental pour résoudre ce type de problématique, selon laquelle un trajet optimal est recherché dans un réseau, est la mise en œuvre de l'algorithme de Dijkstra lorsque l'on connaît le coût de traversée de tout lien entre deux nœuds du réseau. Un autre procédé connu, optimisant l'algorithme de Dijkstra lorsque l'on connaît en outre la direction du point d'arrivée à partir du point de départ, est la mise en œuvre de l'algorithme A* (ou D* pour une version « dynamique » de A*). Ces algorithmes son efficaces et optimaux, mais uniquement lorsque le réseau peut être dans sa totalité représenté par un graphe orienté. C'est le cas lorsque tous les nœuds et liens du réseau sont connus, c'est-à-dire qu'ils ont déjà été explorés et n'ont pas évolué, et lorsqu'en outre le réseau est de dimension raisonnable de sorte que tous les paramètres portant sur ses nœuds et liens peuvent être stockés. Lorsque les coûts de traversées de certains liens évoluent, bien que les nœuds restent connus dans leur totalité, des solutions existent telles que la solution appelée « D* Lite » proposée dans l'article de Koenig et al, intitulé « Fast replanning for navigation in unknown terrain », publié dans IEEE Transactions on Robotics, vol. 21, n° 3, pages 354-363, en Juin 2005.

Il existe cependant de nombreux cas réels dans lesquels il peut être souhaité de commander le déplacement d'un agent navigant dans un environnement organisé en un réseau de nœuds et de liens entre les nœuds partiellement représenté par un graphe orienté, chaque sommet et arête du graphe orienté correspondant respectivement à un nœud et à une orientation d'un lien du réseau, le graphe orienté comportant initialement une pluralité de sommets, appelés « sommets de frontière », à partir de chacun desquels au moins une arête se dirige vers une partie inconnue du réseau non représentée par le graphe orienté. Dans ces nombreux cas où le réseau n'est pas totalement connu, les algorithmes de Dijkstra et A* (ou D*) ne sont pas optimaux parce qu'ils ne proposent qu'une planification de trajet dans la partie connue du réseau, suivie d'une navigation conforme à cette planification, sans phase exploratoire de la partie inconnue du réseau. Dans ces cas également, la solution D* Lite peut ne pas fonctionner lorsque, outre certains liens, des nœuds du réseau peuvent ne pas être connus.

Dans ces cas, des procédés combinant planification, navigation et exploration de l'environnement dans lequel évolue l'agent navigant sont mieux adaptés.

Par exemple, l'article de Argamon-Engelson et al, intitulé « Utility-based on-line exploration for repeated navigation in an embedded graph », publié dans Artificial Intelligence, vol. 101, n° 1-2, pages 267-284, en mai 1998, propose un compromis entre planification/navigation et exploration dans un graphe orienté incomplet. Mais cette solution, appelée « EWP » par ses auteurs, nécessite plusieurs allers-retours entre le sommet de départ et le sommet d'arrivée pour une recherche incrémentale du trajet optimal. Elle est coûteuse et n'est intéressante que lorsqu'un trajet doit être optimisé en vue d'être emprunté un grand nombre de fois. Par ailleurs, cette solution ne tire pas profit d'une méthodologie par évaluation heuristique dans sa recherche progressive de trajet au cours de la phase de planification, ce qui fait tout l'intérêt des algorithmes tels que A*, D* et D* Lite. En fait, une évaluation heuristique globale est bien considérée, mais pas lors de la traversée progressive du graphe. De plus, la solution EWP n'indique pas clairement quelle méthode est employée lors de cette traversée de graphe et suppose que tous les raccourcis possibles utilisant la partie inconnue sont malgré tout connus à l'avance, seule leur coût restant inconnu. Enfin, la phase exploratoire de cette solution nécessite qu'une destination soit prévue à l'avance, par exemple un autre sommet de frontière que celui à partir duquel l'exploration démarre, sans qu'il ne soit prévu de l'arrêter avant si un autre sommet connu du graphe est rencontré entre temps. Un procédé similaire est décrit dans l'article: "ARGAMON-ENGELSON S ET AL: "Interleaved versus a priori exploration for repeated navigation in a partially-known graph", INTERNATIONAL JOURNAL OF PATTERN RECOGNITION AND ARTIFICIAL INTELLIGENCE (IJPRAI), WORLD SCIENTIFIC PUBLISHING, SI, vol. 13, no. 7, 1 novembre 1999, pages 963-986", qui utilise une évaluation heuristique de risque associée à l'exploration à partir d'un nœud donné du graphe.

L'invention s'applique plus particulièrement à un procédé du type précité, lorsque le réseau n'est que partiellement représenté par un graphe orienté, comportant un guidage de l'agent navigant dans son déplacement, entre un sommet de départ et un sommet d'arrivée dans le graphe orienté, par exécution d'au moins une itération des étapes successives suivantes :

- planification d'un trajet dans le graphe orienté, entre un sommet où se trouve l'agent navigant et le sommet d'arrivée ou un sommet de frontière, par exécution d'un algorithme de recherche de trajet sur la base d'une première évaluation heuristique de coût calculée sur des sommets du graphe orienté et sur la base d'une recherche de trajet par croissance progressive du coût,

- commande d'une navigation de l'agent navigant entre l'endroit où il se trouve et le sommet d'arrivée ou le sommet de frontière retourné par l'étape de planification, et

- suite à la navigation et si c'est un sommet de frontière différent du sommet d'arrivée qui est fourni par l'étape de planification, commande d'une exploration dans la partie inconnue du réseau avec enrichissement du graphe orienté par l'ajout du ou des sommet(s) et arête(s) exploré(s).

Un tel procédé, appelé PHA* par ses auteurs, est divulgué dans l'article de Felner et al, intitulé « PHA*: finding the shortest path with A* in an unknown physical environment », publié dans Journal of Artificial Intelligence Research, vol. 21, pages 631-670, en juin 2004.

Mais là encore, la solution proposée est coûteuse en termes de navigation de l'agent navigant dans son environnement, parce que la priorité est donnée à l'exploration des parties inconnues du réseau dès qu'un sommet de frontière est rencontré en cours de planification, de manière à chercher un trajet optimal entre le sommet de départ et le sommet d'arrivée, quel qu'en soit le coût exploratoire. D'ailleurs, la phase exploratoire continue, même lorsque le sommet d'arrivée est éventuellement atteint, tant que le trajet optimal n'est pas trouvé de façon certaine. Cette solution, même si elle exploite avantageusement une méthodologie par évaluation heuristique dans sa recherche progressive de trajet au cours de la phase de planification, notamment l'algorithme A*, reste donc intéressante seulement si le trajet optimal trouvé est destiné à être ultérieurement emprunté un grand nombre de fois.

Il peut ainsi être souhaité de prévoir un procédé de commande d'un déplacement d'un agent navigant qui permette de s'affranchir d'au moins une partie des problèmes et contraintes précités.

Il est donc proposé un procédé, selon la revendication 1, de commande d'un déplacement d'un agent navigant dans un environnement organisé en un réseau de nœuds et de liens entre les nœuds partiellement représenté par un graphe orienté, chaque sommet et arête du graphe orienté correspondant respectivement à un nœud et à une orientation d'un lien du réseau, le graphe orienté comportant initialement une pluralité de sommets, appelés « sommets de frontière », à partir de chacun desquels au moins une arête se dirige vers une partie inconnue du réseau non représentée par le graphe orienté, le procédé comportant un guidage de l'agent navigant dans son déplacement, entre un sommet de départ et un sommet d'arrivée dans le graphe orienté. Le procédé comporte l'exécution d'au moins une itération des étapes successives suivantes :

- planification d'un trajet dans le graphe orienté, entre un sommet où se trouve l'agent navigant et le sommet d'arrivée ou un sommet de frontière, par exécution d'un algorithme de recherche de trajet sur la base d'une première évaluation heuristique de coût calculée sur des sommets du graphe orienté et sur la base d'une recherche de trajet par croissance progressive du coût,

- commande d'une navigation de l'agent navigant entre l'endroit où il se trouve et le sommet d'arrivée ou le sommet de frontière retourné par l'étape de planification, et

- suite à la navigation et si c'est un sommet de frontière différent du sommet d'arrivée qui est fourni par l'étape de planification, commande d'une exploration dans la partie inconnue du réseau avec enrichissement du graphe orienté par l'ajout du ou des sommet(s) et arête(s) exploré(s),

dans lequel l'étape de planification de chaque itération comporte, pour chaque calcul de la première évaluation heuristique de coût sur un sommet de frontière, un calcul supplémentaire d'une deuxième évaluation heuristique de risque sur ce sommet de frontière, et fournit comme destination du trajet le sommet de frontière sur lequel l'évaluation heuristique de risque calculée est la plus faible dès lors que le coût dépasse cette évaluation heuristique de risque la plus faible avant que le sommet d'arrivée ne soit atteint.

Ainsi, tout en tirant profit d'une méthode de planification par évaluation heuristique, il est possible grâce à l'invention, plus précisément grâce au calcul supplémentaire d'une évaluation heuristique de risque en plus de l'évaluation heuristique de coût telle qu'elle peut être proposée par des algorithmes comme A*, d'introduire dans cette planification une notion de risque à effectuer une exploration en cours de navigation et de traiter automatiquement le compromis entre une poursuite de navigation en terrain connu ou une exploration en zone inconnue. De cette manière, il est possible d'engager une navigation exploratoire planifiée en conservant la maîtrise du coût en termes de navigation pour guider l'agent navigant de son sommet de départ à son sommet d'arrivée le plus efficacement possible.

De façon optionnelle, l'étape de planification de chaque itération est exécutée sur la base d'une implémentation de l'algorithme A* dans laquelle la première évaluation heuristique de coût est définie, pour chaque sommet considéré du graphe orienté sur lequel elle est calculée, comme la somme d'un coût minimal pour se rendre du sommet où se trouve l'agent navigant au sommet considéré en naviguant dans le graphe orienté et d'une estimation heuristique de coût minimal pour se rendre du sommet considéré au sommet d'arrivée.

De façon optionnelle également, l'estimation heuristique de coût minimal est une distance exprimée à l'aide de la norme euclidienne entre le sommet considéré et le sommet d'arrivée.

De façon optionnelle également, la deuxième évaluation heuristique de risque est définie, pour chaque sommet de frontière considéré du graphe orienté sur lequel elle est calculée, comme la somme d'un coût minimal pour se rendre du sommet où se trouve l'agent navigant au sommet de frontière considéré en naviguant dans le graphe orienté et d'une estimation heuristique de coût surestimé pour se rendre du sommet de frontière considéré au sommet d'arrivée.

De façon optionnelle également, l'estimation heuristique de coût surestimé correspond à l'estimation heuristique de coût minimal pondérée par un coefficient multiplicatif supérieur ou égal à « 1 ».

De façon optionnelle également, le coefficient multiplicatif est variable en cours de navigation ou entre deux étapes de navigations.

De façon optionnelle également, l'estimation heuristique de coût surestimé est en outre pondérée par un coefficient multiplicatif supplémentaire défini sur la base d'une valeur angulaire exprimée par rapport à la direction de référence d'un axe reliant le sommet de frontière considéré au sommet d'arrivée, ce coefficient multiplicatif supplémentaire étant plus précisément défini de manière à pénaliser toute navigation dans une direction s'éloignant de la direction de référence.

De façon optionnelle également, au moins une règle sémantique définie en fonction des besoins applicatifs est introduite dans la deuxième évaluation heuristique de risque.

De façon optionnelle également, l'étape d'exploration de chaque itération se poursuit jusqu'à ce qu'un sommet quelconque du graphe orienté soit de nouveau atteint.

De façon optionnelle également, lesdites étapes successives sont répétées jusqu'à ce que le sommet d'arrivée soit atteint ou que l'étape de planification soit bloquée au sommet où se trouve l'agent navigant.

Il est également proposé un programme d'ordinateur, selon la revendication 11, téléchargeable depuis un réseau de communication et/ou enregistré sur un support lisible par ordinateur et/ou exécutable par un processeur, comprenant des instructions pour l'exécution des étapes d'un procédé de commande d'un déplacement d'un agent navigant selon l'invention, lorsque ledit programme est exécuté par un processeur.

Il est également proposé un système, selon la revendication 12, de commande d'un déplacement d'un agent navigant dans un environnement organisé en un réseau de nœuds et de liens entre les nœuds partiellement représenté par un graphe orienté, chaque sommet et arête du graphe orienté correspondant respectivement à un nœud et à une orientation d'un lien du réseau, le graphe orienté comportant initialement une pluralité de sommets, appelés « sommets de frontière », à partir de chacun desquels au moins une arête se dirige vers une partie inconnue du réseau non représentée par le graphe orienté, le système comportant un processeur de guidage programmé pour l'exécution des étapes d'un procédé de commande d'un déplacement d'un agent navigant selon l'invention.

L'invention sera mieux comprise à l'aide de la description qui va suivre, donnée uniquement à titre d'exemple et faite en se référant aux dessins annexés dans lesquels :

- la figure 1 représente schématiquement un exemple d'environnement organisé en un réseau de nœuds et de liens entre ces nœuds partiellement représenté par un graphe orienté,
- la figure 2 représente schématiquement la structure générale d'un système de commande d'un déplacement d'un agent navigant, selon un mode de réalisation de l'invention,
- les figures 3 et 4 illustrent les étapes successives d'un procédé mis en œuvre par le système de la figure 1, selon un mode de réalisation de l'invention, et
- les figures 5A, 5B et 5C illustrent différents résultats avec ou sans application du procédé des figures 3 et 4, sur un cas de trajet suivi par un agent navigant dans un environnement représenté par une matrice de pixels.

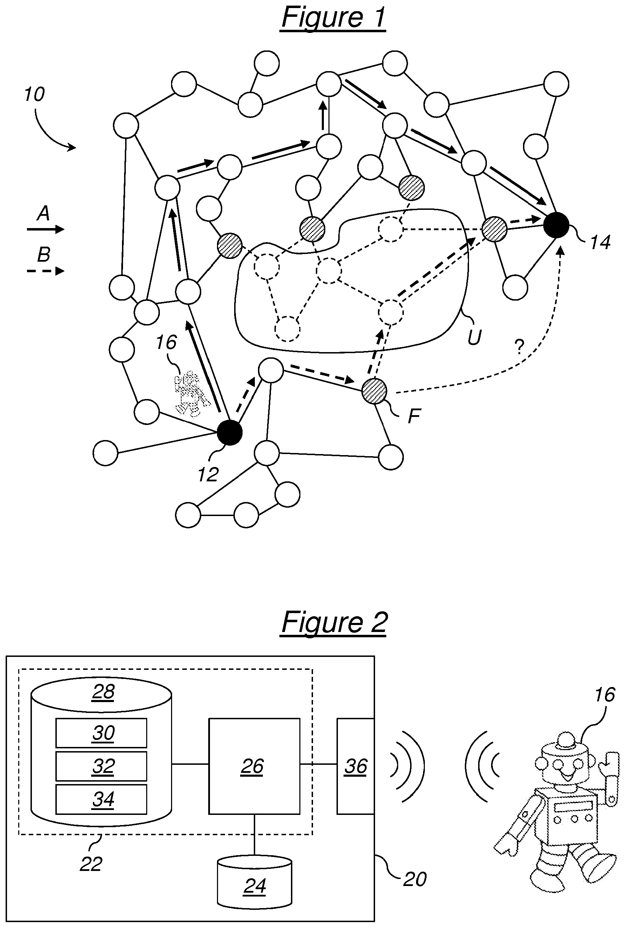

L'environnement représenté sur la figure 1 est un exemple d'environnement organisé en un réseau 10 de nœuds et de liens entre les nœuds partiellement représenté par un graphe orienté. On notera que ce réseau 10 est tout à fait quelconque, que ce soit en termes de disposition des nœuds les uns par rapport aux autres ou de nombre de liens par nœud. Par exemple, bien que cela ne soit pas illustré sur la figure 1, des liens du réseau 10 pourraient se croiser. Dans un certain nombre d'applications assez répandues, le réseau 10 pourrait être organisé en une matrice régulière de pixels reliés les uns aux autres selon un voisinage de huit pixels voisins par pixel.

Une partie du réseau 10 est connue, par exemple parce qu'elle a fait l'objet d'une exploration préalable, et est représentée en traits pleins, à la fois pour les nœuds, qui correspondent aux sommets du graphe orienté, et pour les liens, qui correspondent aux arêtes du graphe orienté. Plus précisément, chaque lien bidirectionnel connu du réseau 10 peut être potentiellement représenté par deux arêtes du graphe orienté, l'une orientée dans un sens et l'autre en sens inverse. Chaque arête du graphe est associée à un coût de traversée.

Une autre partie du réseau 10, référencée U et non représentée par le graphe orienté, est inconnue. Elle est représentée en traits pointillés, à la fois pour les nœuds et pour les liens, qui n'ont pas de correspondance dans le graphe orienté.

Une partie des sommets du graphe orienté, hachurés sur la figure 1, ont un statut particulier. Il s'agit des sommets à partir de chacun desquels au moins une arête se dirige vers ou provient de la partie inconnue U du réseau 10 et est donc elle-même inconnue. Chacun de ces sommets sera qualifié dans la suite de « sommet de frontière ».

Enfin, deux sommets du graphe orienté, en noir sur la figure 1, représentent respectivement un sommet de départ 12 et un sommet d'arrivée 14 relatifs au déplacement d'un agent navigant 16 dans l'environnement organisé selon le réseau 10.

Conformément aux procédés de planification et navigation sans exploration connus, tels que l'algorithme de Dijkstra, A* ou D*, un trajet optimal A serait recherché dans la partie connue du réseau 10, c'est-à-dire celle représentée par le graphe orienté. Il est illustré en flèches à traits pleins sur la figure 1. On notera d'ailleurs que, bien que cela ne soit pas illustré sur la figure 1, le graphe orienté représentant partiellement le réseau 10 pourrait comporter des sous-graphes orientés non connectés entre eux. En particulier, le sommet de départ 12 et le sommet d'arrivée 14 pourraient faire partie de sous-graphes disjoints de sorte qu'un trajet A ne pourrait pas être trouvé en opérant une recherche uniquement dans la partie connue du réseau 10.

Conformément à un système/procédé de commande d'un déplacement de l'agent navigant 16 par planification et navigation exploratoire selon l'invention tel que celui qui va être détaillé en références aux figures 2 à 4, un trajet B plus intéressant parce que moins coûteux que le trajet A peut être trouvé, moyennant un passage dans la partie inconnue U, par exploration à partir de l'un (noté F) des sommets de frontière. Il est illustré en flèches à traits pointillés sur la figure 1. En particulier, dans le cas non illustré où le sommet de départ 12 et le sommet d'arrivée 14, bien qu'accessibles l'un pour l'autre dans le réseau 10, font initialement partie de sous-graphes disjoints, un système/procédé de commande d'un déplacement de l'agent navigant 16 selon l'invention permet de trouver un trajet moyennant nécessairement au moins une phase exploratoire.

Le système 20 de commande du déplacement de l'agent navigant 16 tel que représenté schématiquement sur la figure 2 comporte une unité de traitement 22 associée de façon classique à une mémoire 24 (par exemple une mémoire RAM). Cette mémoire 24 stocke par exemple notamment les paramètres permettant de définir le graphe orienté qui représente partiellement le réseau 10.

L'unité de traitement 22 peut être mise en œuvre dans un dispositif informatique tel qu'un ordinateur classique comportant un processeur associé à une ou plusieurs mémoires pour le stockage de fichiers de données et de programmes d'ordinateurs. L'unité de traitement 22 peut alors elle-même être considérée comme formée d'un processeur 26 de guidage de l'agent navigant 16 associé à une mémoire 28 de stockage des instructions qu'il exécute sous forme de programmes d'ordinateurs.

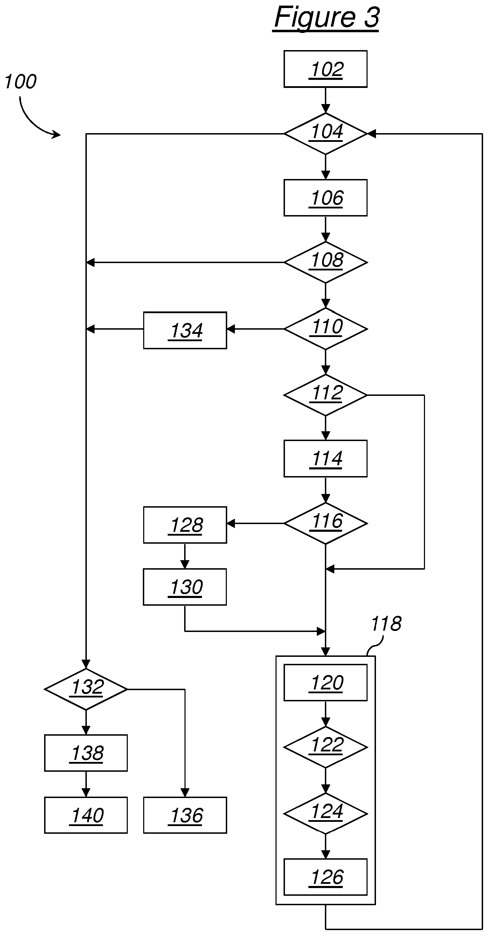

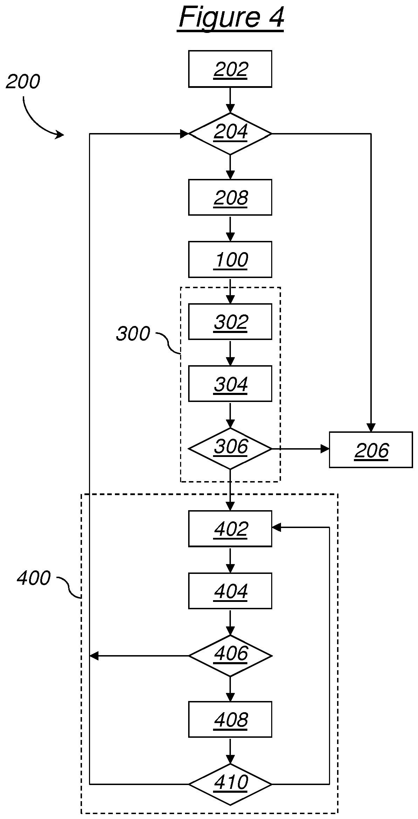

Parmi ces programmes d'ordinateur, un premier programme 30 est par exemple conçu pour l'exécution d'une planification de trajet conforme aux étapes de procédé qui seront détaillées en référence à la figure 3, un deuxième programme 32 est conçu pour l'exécution d'une navigation conforme aux étapes de procédé qui seront détaillées en référence à la figure 4 et un troisième programme 34 est conçu pour l'exécution d'une exploration conforme à ces mêmes étapes de procédé de la figure 4.

L'unité de traitement 22 telle qu'illustrée sur la figure 2 comporte ainsi fonctionnellement trois programmes d'ordinateurs ou trois fonctions d'un même programme d'ordinateur. On notera en effet que les programmes d'ordinateurs 30, 32, 34 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en œuvre l'unité de traitement 22 pourrait être remplacé par un dispositif électronique composé uniquement de circuits numériques (sans programme d'ordinateur) pour la réalisation des mêmes actions.

Selon une variante de réalisation possible, le système de commande 20 est autonome et distant de l'agent navigant 16. Il comporte ainsi une interface 36 de télécommunication avec cet agent navigant 16, gérée par le processeur de guidage 26.

Selon une autre variante de réalisation possible, le système de commande 20 pourrait être embarqué dans l'agent navigant 16.

Un procédé de commande du déplacement de l'agent navigant 16 mis en œuvre par le système 20, par exemple dans l'environnement illustré sur la figure 1, du sommet de départ 12 au sommet d'arrivée 14, va maintenant être détaillé. Il comporte le guidage de l'agent navigant 16 par exécution d'au moins une itération d'une succession d'étapes présentant une phase de planification 100 et une phase de navigation 300 éventuellement suivie d'une phase exploratoire 400.

Un exemple non limitatif de réalisation de la phase de planification 100 est illustré sur la figure 3. Il est basé sur un perfectionnement de l'algorithme A* et est réalisé par exécution des instructions du programme d'ordinateur 30. Lors de l'exécution de cette phase de planification 100 à l'occasion d'une n-ième itération, l'agent navigant 16 se trouve sur un sommet courant $O(n)$ quelconque du graphe orienté, plus précisément le sommet de départ 12 s'il s'agit de la première itération. L'objectif de la phase de planification 100 de la n-ième itération est de déterminer un sommet de destination $T(n)$ dans le graphe orienté et un trajet pour s'y rendre en empruntant des arêtes et sommets du graphe orienté. Cette destination est soit finale s'il s'agit du sommet d'arrivée 14, soit intermédiaire et dans ce cas il s'agit, comme cela sera montré ci-après, de l'un des sommets de frontière du graphe orienté.

Pour réaliser cette planification 100 de destination et de trajet, une première évaluation heuristique de

coût $\delta(X)$ est définie, pour chaque sommet X considéré du graphe orienté sur lequel elle est calculable, à titre d'exemple non limitatif comme la somme d'un coût minimal pour se rendre du sommet courant O(n) au sommet X considéré en naviguant dans le graphe orienté, ce coût minimal étant noté D[O(n),X], et d'une estimation heuristique de coût minimal pour se rendre du sommet X considéré au sommet d'arrivée 14, notée H(X). Cette première évaluation heuristique de coût $\delta(X)$ n'est en pratique calculée que pour certains sommets du graphe orienté, ceux qui sont sollicités sur la base d'une recherche de trajet par croissance progressive du coût $\delta(X)$, comme cela sera détaillé ci-après.

Le coût minimal D[O(n),X] est par exemple celui d'un chemin admissible pour se rendre de O(n) à X, un chemin étant défini comme admissible s'il n'existe pas de chemin plus court dans le graphe orienté pour se rendre de O(n) à X. En particulier, D[O(n),X] = ∞ s'il n'existe pas de chemin dans le graphe pour se rendre de O(n) à X.

Conformément aux exigences de l'algorithme A*, l'estimation heuristique de coût minimal H(X) est elle aussi admissible, ce qui signifie qu'elle ne doit jamais surestimer les coûts de navigation. Un exemple simple pour H(X) est de la définir comme une distance exprimée à l'aide de la norme euclidienne entre le sommet X considéré et le sommet d'arrivée 14 puisqu'aucun coût de navigation ne peut être inférieur à une telle distance qui représente une navigation à vol d'oiseau.

Pour réaliser la planification de destination et de trajet, une deuxième évaluation heuristique de risque R(Z) est définie, mais uniquement pour chaque sommet de frontière Z considéré du graphe orienté sur lequel elle est calculable, d'une façon générale de manière à être supérieure ou égale à la première évaluation heuristique de coût en Z, i.e. $\delta(Z)$. Elle est par exemple plus précisément définie, à titre d'exemple non limitatif comme la somme d'un coût minimal D[O(n),Z] pour se rendre du sommet courant O(n) au sommet de frontière Z considéré en naviguant dans le graphe orienté et d'une estimation heuristique de coût surestimé pour se rendre du sommet de frontière Z considéré au sommet d'arrivée 14. Cette estimation heuristique de coût surestimé est notée H'(Z). Cette deuxième évaluation heuristique de risque R(Z) n'est en pratique également calculée que pour certains sommets de frontière du graphe orienté, ceux qui sont sollicités sur la base de la recherche précitée de trajet par croissance progressive du coût $\delta(X)$, comme cela sera détaillé ci-après.

Le coût minimal D[O(n),Z] est défini pour Z de la même façon que pour tout sommet X du graphe orienté. Quant à l'estimation heuristique de coût surestimé H'(Z), elle peut être définie à partir de l'estimation heuristique de coût minimal H(Z) avec l'application d'au moins un coefficient additif ou multiplicatif de risque, de telle sorte qu'elle vérifie H'(Z) ≥ H(Z) de manière à assurer l'inégalité R(Z) ≥ $\delta(Z)$. En particulier, dans l'exemple d'au moins un coefficient multiplicatif de risque, on peut définir H'(Z) de la façon suivante :

$$H'(Z) = \alpha \cdot (1 - \beta \cdot \cos\theta) \cdot H(Z),$$

où $\alpha$ est un coefficient multiplicatif supérieur ou égal à « 1 » et $(1 - \beta.\cos\theta)$ est un coefficient multiplicatif supplémentaire défini sur la base d'une valeur angulaire $\theta$, exprimée par rapport à la direction de référence d'un axe reliant le sommet de frontière considéré Z au sommet d'arrivée 14, et d'un coefficient de pondération $\beta$ inférieur ou égal à « 1 ».

Avantageusement, la valeur angulaire $\theta$, exprime l'orientation de l'arête partant du sommet de frontière Z courant la plus proche de la direction de référence et c'est cette arête qui sera de préférence choisie pour démarrer une exploration si le sommet de frontière Z est retenu comme destination de la phase de planification. Ainsi, le coefficient multiplicatif $(1 - \beta.\cos\theta)$ est défini de manière à pénaliser toute navigation exploratoire dans une direction s'éloignant de la direction de référence.

On notera que l'évaluation heuristique de risque R(Z) peut être librement adaptée pour obéir à une ou plusieurs règles sémantiques de plus haut niveau pouvant être définies en fonction des besoins applicatifs. Par exemple, le coefficient multiplicatif $\alpha$, ou plus généralement la fonction R(Z), peut être variable au cours d'une phase de navigation ou entre deux phases de navigation de manière à réduire ($\alpha$ plus grand) ou augmenter ($\alpha$ plus petit) les prises de risques, notamment en fonction de ressources épuisables de l'agent navigant 16, ou parce qu'il est décidé de limiter les prises de risques à chaque nouvelle itération, etc. De même, s'il est connu au moins un point de recharge en ressources pour l'agent navigant 16, qu'il soit précisément identifié en partie connue du réseau 10 ou supposé en partie inconnue U, il peut être souhaité d'adapter l'évaluation heuristique de risque R(Z) pour augmenter l'incitation à passer par ce point de recharge. De même, une règle d'auto-évaluation de la stratégie exploratoire de l'agent navigant 16 peut être ajoutée en mesurant par exemple en temps réel l'énergie dépensée en cours de navigation exploratoire par rapport à ce qui aurait été dépensé en planification/navigation seule (en particulier par simple exécution de l'algorithme A*), de manière à adapter l'évaluation heuristique de risque R(Z), notamment en influant sur la valeur du coefficient multiplicatif $\alpha$, en fonction des performances réalisées. D'autres règles sémantiques susceptibles d'influer sur l'évaluation heuristique de risque R(Z), telles que par exemple des connaissances plus ou moins précises sur des facilités ou obstacles dans les parties connue et inconnue, sont envisageables et peuvent être intégrées dans cette évaluation heuristique de risque R(Z).

On notera par ailleurs que d'une façon générale, l'évaluation heuristique de risque R(Z) peut être définie librement de manière à globalement surestimer la somme $\delta(Z) = D[O(n),Z] + H(Z)$ et pas nécessairement H(Z) seul.

Au cours d'une première étape d'initialisation 102 de la phase de planification 100, le sommet courant O(n) sur lequel se trouve l'agent navigant 16 est placé dans une file d'attente prioritaire, appelée liste ouverte et notée Q, en association avec sa première évaluation heuristique de coût $\delta(O(n))$. Une autre file d'attente, appelée liste fermée et notée S, est définie et initialisée à l'ensemble vide. Ces deux listes, ouverte Q et fermée S, correspondent à celles qui sont utilisées de façon bien connue pour l'algorithme A*. Le sommet de destination T(n) est initialisé indifféremment à l'ensemble vide ou au sommet courant O(n). Enfin, une valeur de coût exploratoire notée $R_{min}$ est initialisée à la valeur infinie $\infty$.

Au cours d'une étape 104 suivante, le contenu de la liste ouverte Q est testé. Si elle n'est pas vide, alors le processeur 26 passe à une étape 106 de retrait de l'un des sommets de la liste ouverte Q pour le placer dans la liste fermée S. Le sommet X qui est retiré est celui, ou l'un de ceux, qui présente le coût $\delta(X)$ le plus faible.

Ensuite, au cours d'une étape de test 108, la valeur de coût $\delta(X)$ du sommet X sélectionné précédemment est comparée à la valeur de coût exploratoire $R_{min}$. Si le coût $\delta(X)$ est inférieur ou égal au coût exploratoire $R_{min}$, le processeur 26 passe à une autre étape de test 110.

Au cours de l'étape de test 110, le sommet X sélectionné est comparé au sommet d'arrivée 14. Si X est différent du sommet d'arrivée 14, le processeur 26 passe à une autre étape de test 112.

Au cours de l'étape de test 112, il est déterminé si le sommet X sélectionné est un sommet de frontière du graphe orienté. Si X est bien un sommet de frontière, le processeur 26 passe à une étape 114.

Au cours de cette étape 114, l'heuristique de risque R(X) est évaluée.

Au cours d'une étape de test 116 suivante, le risque R(X) est comparé au coût exploratoire $R_{min}$. S'il est strictement supérieur au coût exploratoire $R_{min}$, le processeur 26 passe directement à une boucle 118 d'étapes 120, 122, 124, 126 exécutées pour tous les sommets T voisins du sommet X dans le graphe orienté. Sinon, le processeur 26 passe à deux étapes successives de mise à jour 128 et 130.

Au cours de l'étape 128, le sommet de destination T(n) devient le sommet de frontière X. Au cours de l'étape 130, le coût exploratoire $R_{min}$ est mis à jour à la valeur de R(X). L'ordre d'exécution des étapes 128 et 130 est indifférent. Elles sont suivies de la boucle 118 d'étapes 120, 122, 124, 126.

Le processeur 26 passe également directement à la boucle 118 d'étapes 120, 122, 124, 126 s'il est déterminé à l'étape de test 112 que le sommet X sélectionné n'est pas un sommet de frontière.

Au cours de l'exécution de la boucle 118 d'étapes 120, 122, 124, 126, pour chaque voisin T du sommet X dans le graphe orienté :

- l'heuristique de coût $\delta(T)$ est évaluée (étape 120),

- il est testé (étape 122) si le sommet T est déjà dans la liste fermée S et si l'heuristique de coût $\delta(T)$ évaluée à l'étape 120 est supérieure ou égale au coût associé à T dans la liste fermée S,
- il est testé (étape 124) si le sommet T est déjà dans la liste ouverte Q et si l'heuristique de coût $\delta(T)$ évaluée à l'étape 120 est supérieure ou égale au coût associé à T dans la liste ouverte Q, et
- si les deux tests 122 et 124 présentent un résultat négatif, alors T est introduit dans la liste ouverte Q en association avec l'heuristique de coût $\delta(T)$ évaluée à l'étape 120.

En fin de boucle 118, le processeur 26 revient à l'étape de test 104.

S'il est testé que la liste ouverte Q est vide à l'étape 104, le processeur 26 passe à une étape de test 132.

Le processeur 26 passe également à l'étape de test 132 à l'issue de l'étape 108 si le coût $\delta(X)$ est strictement supérieur au coût exploratoire $R_{min}$.

Le processeur 26 passe également à l'étape de test 132 à l'issue de l'étape 110, via une étape de mise à jour 134, si le sommet X est le sommet d'arrivée 14. Dans ce cas, le sommet de destination T(n) devient le sommet d'arrivée 14 et le coût exploratoire $R_{min}$ est mis à jour à la valeur de R(X) au cours de cette étape 134.

L'étape de test 132 consiste à déterminer si le sommet de destination T(n) est resté à sa valeur d'initialisation (i.e. l'ensemble vide ou le sommet courant O(n)).

Si c'est le cas, le processeur 26 passe à une étape 136 de fin de commande du déplacement de l'agent navigant 16. Arriver à cette étape 136 signifie que la planification est bloquée au sommet où se trouve l'agent navigant 16 et que le sommet d'arrivée 14 est inaccessible ou alors que l'agent navigant 16 est déjà au sommet d'arrivée 14, celui-ci ayant été atteint préalablement à l'itération courante.

Si ce n'est pas le cas, le processeur 26 passe à une étape 138 au cours de laquelle un trajet est reconstruit depuis le sommet de destination T(n) jusqu'au sommet courant O(n). Cette étape 138 est conforme à l'enseignement de l'algorithme A* et bien connue. Elle ne sera pas détaillée.

Puis au cours d'une étape finale 140, le processeur 26 fournit le sommet de destination T(n) déterminé et le trajet pour s'y rendre en empruntant des arêtes et sommets du graphe orienté. Ces informations sont nécessaires pour commencer la phase de navigation 300.

Il est clair que la phase de planification 100 détaillée précédemment permet de planifier une navigation entre le sommet où se trouve l'agent navigant 16 et :

- soit le sommet d'arrivée 14 si l'étape de test 132 est atteinte en sortie de l'étape 134, ou en sortie de l'étape 104 avec le sommet de destination T(n) égal au sommet d'arrivée 14,
- soit un sommet de frontière si l'étape de test 132 est atteinte en sortie de l'étape 108, ou en sortie de l'étape 104 avec le sommet de destination T(n) égal à l'un des sommets de frontière du graphe orienté.

En particulier, les étapes 112 et 114 imposent que pour chaque calcul de l'évaluation heuristique de coût δ(X) effectué sur un sommet de frontière, un calcul supplémentaire de l'évaluation heuristique de risque R(X) est réalisé sur ce sommet de frontière et l'étape de test 108 assure alors, en combinaison avec les étapes 116, 128 et 130, que la planification 100 fournit comme destination T(n) le sommet de frontière sur lequel l'évaluation heuristique de risque R(X) calculée est la plus faible ($R_{min}$) dès lors que le coût δ(X) dépasse cette évaluation heuristique de risque la plus faible $R_{min}$ avant que le sommet d'arrivée 14 ne soit atteint.

Il est clair également que la phase de planification 100 est basée sur une recherche de trajet par croissance progressive du coût δ(X) grâce à l'étape de retrait 106 et à la gestion des listes ouverte Q et fermée S.

Il est clair enfin que cette phase de planification 100, basée sur une implémentation de l'algorithme A*, pourrait aussi être basée sur un autre algorithme de recherche de trajet par croissance progressive d'un coût évalué heuristiquement. En particulier, si l'on impose une estimation heuristique de coût minimal nulle pour se rendre de tout sommet considéré au sommet d'arrivée 14, cela base la phase de planification sur une implémentation de l'algorithme de Dijkstra.

Compte tenu du fonctionnement de la phase de planification 100 détaillée ci-dessus, le procédé plus global, référencé 200, de commande du déplacement de l'agent navigant 16 va maintenant être décrit en référence à la figure 4.

Il comporte une première étape d'initialisation 202 au cours de laquelle l'indice d'itération n est initialisé à « 1 » et le sommet courant O(n) au sommet de départ 12.

Au cours d'une étape 204 suivante, le sommet courant O(n) est testé. S'il correspond au sommet d'arrivée 14, alors le processeur 26 passe à une étape 206 de fin de commande du déplacement de l'agent navigant 16 puisque ce dernier est arrivé à destination. Sinon, le processeur 26 exécute les étapes de la phase de planification 100 en ayant éventuellement préalablement adapté l'évaluation heuristique de risque R(Z) au cours d'une étape optionnelle 208.

Si la phase de planification 100 se termine à l'étape 136, le procédé 200 se termine alors que l'agent navigant 16 reste bloqué sans pouvoir atteindre le sommet d'arrivée 14 ou alors que l'agent navigant 16 est déjà au sommet d'arrivée 14, celui-ci ayant été atteint préalablement à l'itération courante. En particulier, conformément au fonctionnement du procédé 200 avec ses phases de planification 100, navigation 300 et exploration 400, si le sommet d'arrivée 14 n'est finalement pas atteint, c'est qu'il n'existe effectivement pas de chemin du sommet de départ 12 au sommet d'arrivée 14 dans le réseau 10 et que tous les nœuds du réseau 10 atteignables depuis le sommet de départ 12 ont été explorés.

Si la phase de planification 100 se termine à l'étape 140, à l'issue de laquelle le sommet de destination T(n) et le trajet pour s'y rendre sont fournis, le processeur 26 démarre la phase de navigation 300 par exécution des instructions du programme d'ordinateur 32.

Cette phase de navigation 300 comporte une étape 302 de guidage de l'agent navigant 16 à travers le graphe orienté depuis sa position courante O(n) jusqu'à sa destination T(n) en suivant le trajet indiqué. La destination T(n) devient alors le nouveau sommet courant O(n+1).

Elle comporte ensuite une étape 304 d'incrémentation de l'indice d'itération n d'une unité, puis une étape 306 au cours de laquelle le sommet courant O(n) ← O(n+1) est testé. S'il correspond au sommet d'arrivée 14, alors le processeur 26 passe à l'étape 206.

Sinon, cela signifie qu'il correspond à l'un des sommets de frontière à partir duquel une exploration est souhaitée et le processeur 26 démarre la phase exploratoire 400 par exécution des instructions du programme d'ordinateur 34.

Au cours d'une première étape 402 de la phase exploratoire, l'agent navigant 16 est guidé le long d'une arête de la partie inconnue U du réseau 10 jusqu'à un nouveau sommet courant O(n+1) *a priori* inconnu lui aussi. Cette arête est par exemple la meilleure arête inconnue pour se diriger vers le sommet d'arrivée 14, sélectionnée en fonction de son orientation minimisant l'angle θ comme indiqué précédemment. Elle peut aussi par défaut être choisie au hasard.

Au cours d'une étape 404 suivante, la nouvelle arête explorée est ajoutée au graphe orienté de manière à l'enrichir des informations obtenues grâce à cette exploration. De nouveau, l'indice d'itération n est incrémenté d'une unité.

Au cours d'une étape 406 suivante, le nouveau sommet courant O(n) ← O(n+1) est testé. S'il appartient déjà au graphe orienté, alors le processeur 26 revient à l'étape de test 204 pour une fin de procédé ou une nouvelle planification. Sinon, il passe à une étape 408 lors de laquelle le nouveau sommet courant est ajouté au graphe orienté de manière à l'enrichir des informations obtenues grâce à l'exploration.

Suite à l'étape 408, le sommet courant O(n) est de nouveau testé au cours d'une étape 410. S'il ressort de ce test que ce sommet courant n'est pas un sommet de frontière, alors, puisqu'il vient d'être ajouté au graphe orienté, cela signifie qu'il s'agit d'une impasse. Le processeur 26 revient donc à l'étape de test 204 pour une fin de procédé ou une nouvelle planification.

S'il ressort au contraire du test de l'étape 410 que le sommet courant O(n) est un sommet de frontière, le processeur 26 revient à la première étape 402 de la phase exploratoire. L'exploration se poursuit jusqu'à ce qu'un sommet quelconque du graphe orienté, c'est-à-dire un sommet déjà connu, soit de nouveau atteint.

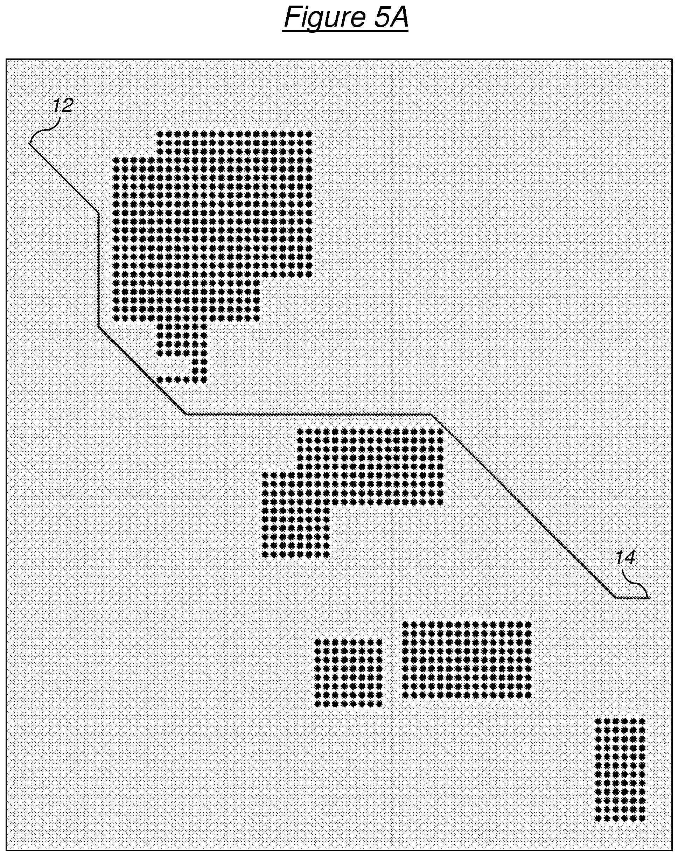

La figure 5A illustre le résultat de l'exécution d'un procédé de commande de l'agent navigant 16 selon l'invention, tel que celui des figures 3 et 4, dans un environnement organisé en une matrice de pixels liés entre eux selon un voisinage de huit pixels voisins par pixel, cet environnement étant en outre complètement représenté par un graphe orienté. En gris clair sont représentés les pixels qui peuvent être traversés et en noir sont représentés ceux qui constituent un obstacle. Dans ce cas particulier, l'exécution d'un procédé selon l'invention produit le même résultat que l'exécution d'un algorithme tel que A*, c'est-à-dire un trajet optimal du sommet de départ 12 au sommet d'arrivée 14 compte tenu des obstacles présents. Notons $L_A$ la longueur de référence de ce trajet et fixons sa valeur arbitrairement à 100.

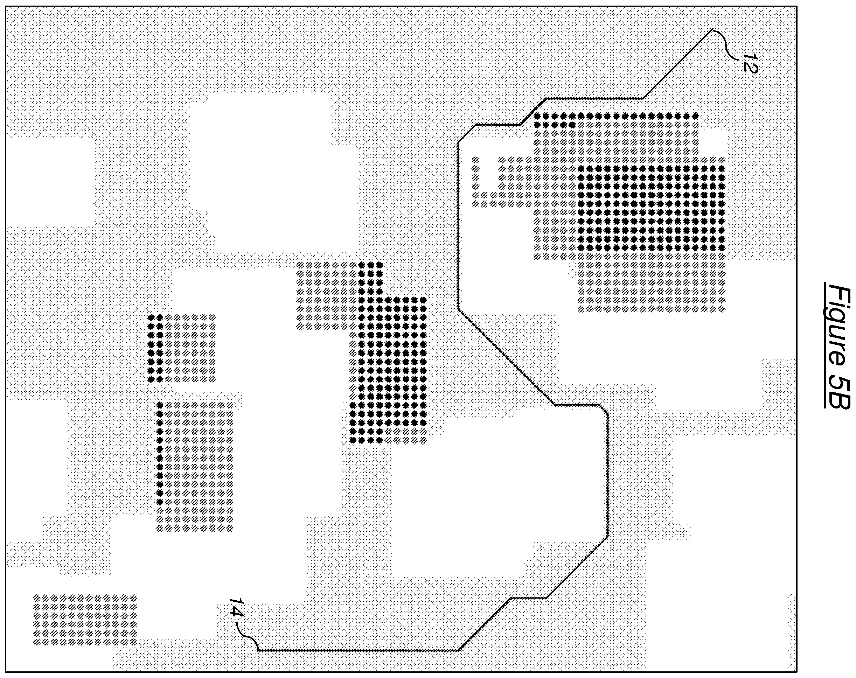

La figure 5B illustre le résultat de l'exécution d'un procédé de commande de l'agent navigant 16 utilisant un algorithme de planification tel que A* et procédant à une navigation non exploratoire, dans le même environnement que celui de la figure 5A, cet environnement n'étant cependant cette fois-ci que partiellement représenté par un graphe orienté. En gris clair sont représentés les pixels connus qui peuvent être traversés et en noir sont représentés ceux qui sont connus et constituent un obstacle. Par ailleurs, en blanc sont représentés les pixels de la partie inconnue U qui peuvent être traversés et en gris moyen sont représentés ceux qui sont dans la partie inconnue U et constituent un obstacle. Dans ce cas, l'exécution d'un procédé tel que l'algorithme A*, produit un trajet non optimal qui ne s'aventure pas dans la partie inconnue U. Dans cet exemple, la longueur $L_B$ du trajet trouvé et suivi par l'agent navigant 16 entre le sommet de départ 12 et le sommet d'arrivée 14 est de l'ordre de 135.

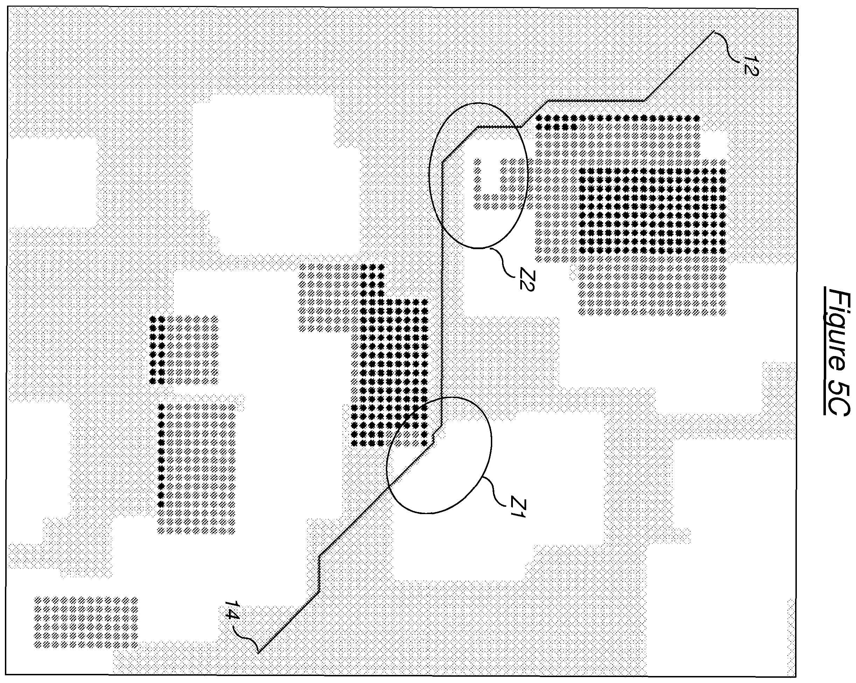

La figure 5C illustre le résultat de l'exécution d'un procédé de commande de l'agent navigant 16 selon l'invention, tel que celui des figures 3 et 4, dans le même environnement partiellement représenté par un graphe orienté que celui de la figure 5B. Dans ce cas, et sur la base d'une certaine heuristique de risque choisie, l'exécution d'un procédé selon l'invention produit un trajet proche du trajet optimal qui s'aventure (zone Z1) ou pas (zone Z2) dans la partie inconnue U. Dans cet exemple, la longueur $L_C$ du trajet trouvé et suivi par l'agent navigant 16 entre le sommet de départ 12 et le sommet d'arrivée 14 est de l'ordre de 102.

On note en particulier que la zone Z2 n'est pas explorée, probablement parce que le gain potentiel en optimalité du trajet si cette zone était explorée est largement compensé par le risque encouru à explorer cette zone. D'ailleurs, on peut noter que dans l'exemple illustré, une telle exploration de la zone Z2 conduirait très certainement l'agent navigant 16 à s'engager dans l'impasse de l'obstacle partiellement présent dans la partie inconnue U. C'est un piège que la mise en œuvre d'un procédé selon l'invention peut éviter, par opposition à la solution PHA* qui tomberait immanquablement dans ce piège par son exploration systématique dans laquelle la notion de risque est absente.

Il apparaît clairement qu'un système/procédé de commande d'un déplacement d'un agent navigant, dans un environnement partiellement représenté par un graphe orienté, tel que celui décrit précédemment permet de procéder à une navigation exploratoire en opérant un compromis maîtrisé, lié à la gestion d'un risque défini spécifiquement par heuristique et pouvant être adapté au contexte visé, entre une navigation planifiée sans exploration et une navigation où l'exploration est trop systématique. Seule l'exploration strictement nécessaire à la navigation est réalisée.

En particulier, un procédé tel que celui qui a été détaillé précédemment permet de procéder à une navigation efficace même si aucun chemin n'est initialement connu entre un point de départ et un point d'arrivée lors de la planification. Le temps de planification peut notamment être optimisé si on le compare au temps d'une planification selon A* suivie d'une exploration quelconque.

Il permet en outre de supprimer toute exploration préalable à une planification par fusion de la navigation avec l'exploration.

Enfin, il est adapté aux applications dans lesquelles, même si une représentation graphique complète de l'environnement dans lequel évolue l'agent navigant est théoriquement possible, elle n'est en pratique qu'incomplète pour des raisons de sollicitation minimale des moyens de stockage (carte mémoire limitée, compression de données, etc.).

Les applications sont multiples :

- en robotique mobile, notamment dans des contextes de cartographie et localisation simultanées ou dans des contextes d'investigation sécurisée en milieu hostile,
- dans le secteur automobile, pour la conception de véhicules intelligents,
- en routage classique pour la transmission de données à travers des réseaux complexes et/ou évolutifs, par exemple des réseaux évolutifs d'objets connectés,
- pour la recherche de chemins dans des bases de données sémantiques,
- etc.

Le choix d'une heuristique de risque efficace dépend de l'application envisagée et du problème correspondant à traiter.

On notera par ailleurs que l'invention n'est pas limitée au mode de réalisation décrit précédemment. Il apparaîtra en effet à l'homme de l'art que diverses modifications peuvent y être apportées à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

**Revendications**

1. Procédé (200) de commande d'un déplacement d'un agent navigant (16) dans un environnement organisé en un réseau (10) de nœuds et de liens entre les nœuds partiellement représenté par un graphe orienté, chaque sommet et arête du graphe orienté correspondant respectivement à un nœud et à une orientation d'un lien du réseau, le graphe orienté comportant initialement une pluralité de sommets, appelés « sommets de frontière », à partir de chacun desquels au moins une arête se dirige vers une partie inconnue (U) du réseau non représentée par le graphe orienté, le procédé comportant un guidage de l'agent navigant (16) dans son déplacement, entre un sommet de départ (12) et un sommet d'arrivée (14) dans le graphe orienté, par exécution, au moyen d'un processeur,
d'au moins une itération des étapes successives suivantes :

    - planification (100) d'un trajet dans le graphe orienté, entre un sommet où se trouve l'agent navigant (16) et le sommet d'arrivée (14) ou un sommet de frontière (F), par exécution d'un algorithme de recherche de trajet sur la base d'une première évaluation heuristique de coût calculée (102, 120) sur des sommets du graphe orienté et sur la base d'une recherche de trajet par croissance progressive du coût (106),
    - commande d'une navigation (300) de l'agent navigant (16) entre l'endroit où il se trouve et le sommet d'arrivée (14) ou le sommet de frontière (F) retourné par l'étape de planification (100), et
    - suite à la navigation (300) et si c'est un sommet de frontière (F) différent du sommet d'arrivée (14) qui est fourni par l'étape de planification (100), commande d'une exploration (400) dans la partie inconnue (U) du réseau (10) avec enrichissement du graphe orienté par l'ajout du ou des sommet(s) et arête(s) exploré(s),

    **caractérisé en ce que** l'étape de planification (100) de chaque itération comporte, pour chaque calcul (102, 120) de la première évaluation heuristique de coût sur un sommet de frontière (F), un calcul supplémentaire (114) d'une deuxième évaluation heuristique de risque sur ce sommet de frontière (F), et fournit comme destination du trajet le sommet de frontière (F) sur lequel l'évaluation heuristique de risque calculée est la plus faible dès lors (108) que le coût dépasse cette évaluation heuristique de risque la plus faible avant que le sommet d'arrivée (14) ne soit atteint.

2. Procédé (200) de commande d'un déplacement d'un agent navigant (16) selon la revendication 1, dans lequel l'étape de planification (100) de chaque itération est exécutée sur la base d'une implémentation de l'algorithme A* dans laquelle la première évaluation heuristique de coût est définie, pour chaque sommet considéré du graphe orienté sur lequel elle est calculée (102, 120), comme la somme d'un coût minimal pour se rendre du sommet où se trouve l'agent navigant (16) au sommet considéré en naviguant dans le graphe orienté et d'une estimation heuristique de coût minimal pour se rendre du sommet considéré au sommet d'arrivée (14).

3. Procédé (200) de commande d'un déplacement d'un agent navigant (16) selon la revendication 2, dans lequel l'estimation heuristique de coût minimal est une distance exprimée à l'aide de la norme euclidienne entre le sommet considéré et le sommet d'arrivée (14).

4. Procédé (200) de commande d'un déplacement d'un agent navigant (16) selon la revendication 2 ou 3, dans lequel la deuxième évaluation heuristique de risque est définie, pour chaque sommet de frontière (F) considéré du graphe orienté sur lequel elle est calculée (114), comme la somme d'un coût minimal pour se rendre du sommet où se trouve l'agent navigant (16) au sommet de frontière (F) considéré en naviguant dans le graphe orienté et d'une estimation heuristique de coût surestimé pour se rendre du sommet de frontière (F) considéré au sommet d'arrivée (14).

5. Procédé (200) de commande d'un déplacement d'un agent navigant (16) selon la revendication 4, dans lequel l'estimation heuristique de coût surestimé correspond à l'estimation heuristique de coût minimal pondérée par un coefficient multiplicatif supérieur ou égal à « 1 ».

6. Procédé (200) de commande d'un déplacement d'un agent navigant (16) selon la revendication 5, dans lequel le coefficient multiplicatif est variable en cours de navigation (300) ou entre deux étapes de navigations (300).

7. Procédé (200) de commande d'un déplacement d'un agent navigant (16) selon la revendication 5 ou 6, dans lequel l'estimation heuristique de coût surestimé est en outre pondérée par un coefficient multiplicatif supplémentaire défini sur la base d'une valeur angulaire exprimée par rapport à la direction de référence d'un axe reliant le sommet de frontière considéré au sommet d'arrivée (14), ce coefficient multiplicatif supplémentaire étant plus précisément défini de manière à pénaliser toute navigation (300) dans une direction s'éloignant de la direction de référence.

8. Procédé (200) de commande d'un déplacement d'un agent navigant (16) selon l'une quelconque des revendications 1 à 7, dans lequel au moins une règle sémantique définie en fonction des besoins applicatifs est introduite dans la deuxième évaluation heuristique de risque (114).

9. Procédé (200) de commande d'un déplacement d'un agent navigant (16) selon l'une quelconque des revendications 1 à 8, dans lequel l'étape d'exploration (400) de chaque itération se poursuit jusqu'à ce qu'un sommet quelconque du graphe orienté soit de nouveau atteint.

10. Procédé (200) de commande d'un déplacement d'un agent navigant (16) selon l'une quelconque des revendications 1 à 9, dans lequel lesdites étapes successives (100, 300, 400) sont répétées jusqu'à ce que le sommet d'arrivée (14) soit atteint ou que l'étape de planification (100) soit bloquée au sommet où se trouve l'agent navigant (16).

11. Programme d'ordinateur (30, 32, 34) téléchargeable depuis un réseau de communication et/ou enregistré sur un support lisible par ordinateur et/ou exécutable par un processeur, **caractérisé en ce qu'**il comprend des instructions pour l'exécution des étapes d'un procédé (200) de commande d'un déplacement d'un agent navigant (16) selon l'une quelconque des revendications 1 à 10, lorsque ledit programme (30, 32, 34) est exécuté par un processeur (26).

12. Système (20) de commande d'un déplacement d'un agent navigant (16) dans un environnement organisé en un réseau (10) de nœuds et de liens entre les nœuds partiellement représenté par un graphe orienté, chaque sommet et arête du graphe orienté correspondant respectivement à un nœud et à une orientation d'un lien du réseau, le graphe orienté comportant initialement une pluralité de sommets, appelés « sommets de frontière », à partir de chacun desquels au moins une arête se dirige vers une partie inconnue (U) du réseau non représentée par le graphe orienté, le système comportant un processeur de guidage (22) programmé (30, 32, 34) pour l'exécution des étapes d'un procédé (200) de commande d'un déplacement d'un agent navigant (16) selon l'une quelconque des revendications 1 à 10.

**Patentansprüche**

1. Verfahren (200) zur Steuerung einer Bewegung eines navigierenden Agenten (16) in einer in einem Netzwerk (10) an Knoten und Verbindungen zwischen den Knoten, teilweise durch einen gerichteten Graphen repräsentierten, organisierten Umgebung, wobei jeder Scheitelpunkt und jede Kante des gerichteten Graphen jeweils einem Knoten und einer Ausrichtung einer Verbindung des Netzwerks entspricht, wobei der gerichtete Graph ursprünglich eine Vielzahl von Scheitelpunkten, "Grenzscheitelpunkte" genannt, beinhaltet, aus jedem von denen sich mindestens eine Kante zu einem unbekannten Teil (U) des Netzwerks begibt, der nicht von dem gerichteten Graphen repräsentiert wird, wobei das Verfahren ein Leiten des navigierenden Agenten (16) in seiner Bewegung zwischen einem Startscheitelpunkt (12) und einem Ankunftsscheitelpunkt (14) in dem gerichteten Graphen, durch Ausführen anhand eines Prozessors, mindestens einer Iteration der folgenden aufeinanderfolgenden Schritte beinhaltet:

- Planen (100) einer Strecke in dem gerichteten Graphen zwischen einem Scheitelpunkt, auf dem sich der navigierende Agent (16) befindet und der Ankunftsscheitelpunkt (14) oder einem Grenzscheitelpunkt (F), durch Ausführen eines Streckensuchalgorithmus auf der Basis einer ersten berechneten heuristischen Kostenbewertung (102, 120) auf Scheitelpunkten des gerichteten Graphen und auf der Basis einer Streckensuche durch progressiven Kostenanstieg (106),
- Befehlen einer Navigation (300) des navigierenden Agenten (16) zwischen der Stelle, an der er sich befindet und dem Ankunftsscheitelpunkt (14) oder dem Grenzscheitelpunkt (F), der durch den Planungsschritt (100) zurückgeschickt wird, und
- im Anschluss an die Navigation (300), und falls es sich um einen Grenzscheitelpunkt (F) handelt, der sich von dem Ankunftsscheitelpunkt (14) unterscheidet, der von dem Planungsschritt (100) bereitgestellt wird, Befehlen einer Erkundung (400) in dem unbekannten Teil (U) des Netzwerks (10) mit Bereicherung des gerichteten Graphen durch Hinzufügen des oder der erkundeten Scheitelpunkt(e)s und der Kante(n), **dadurch gekennzeichnet, dass** der Planungsschritt (100) jeder Iteration für jede Berechnung (102, 120) der ersten heuristischen Kostenbewertung auf einem Grenzscheitelpunkt (F) eine zusätzliche Berechnung (114) einer zweiten heuristischen Risikobewertung auf diesem Grenzscheitelpunkt (F) beinhaltet, und als Destination der Strecke den Grenzscheitelpunkt (F) bereitstellt, auf dem die berechnete heuristische Risikobewertung die geringste ist, sofern (108) die Kosten diese schwächste heuristische Risikobewertung überschreiten, bevor der Ankunftsscheitelpunkt (14) erreicht wird.

2. Verfahren (200) zur Steuerung einer Bewegung eines navigierenden Agenten (16) nach Anspruch 1, wobei der Planungsschritt (100) jeder Iteration auf der Basis einer Einbeziehung des Algorithmus A* ausgeführt wird, bei dem die erste heuristische Kostenbewertung für jeden angenommenen Scheitelpunkt des gerichteten Graphen, auf dem sie berechnet (102, 120) wird, als die Summe von Mindestkosten, um sich von dem Scheitelpunkt, auf dem sich der navigierende Agent (16) befindet, durch Navigieren in dem gerichteten Graphen zum angenommenen Scheitelpunkt zu begeben, und einer heuristischen Mindestkostenschätzung definiert wird, um sich von dem angenommenen Scheitelpunkt zum Ankunftsscheitelpunkt (14) zu begeben.

3. Verfahren (200) zur Steuerung einer Bewegung eines navigierenden Agenten (16) nach Anspruch 2, wobei die heuristische Mindestkostenschätzung eine Distanz ist, die mithilfe der euklidischen Norm zwischen dem angenommenen Scheitelpunkt und dem Ankunftsscheitelpunkt (14) ausgedrückt wird.

4. Verfahren (200) zur Steuerung einer Bewegung eines navigierenden Agenten (16) nach Anspruch 2 oder 3, wobei die zweite heuristische Risikoschätzung für jeden angenommenen Grenzscheitelpunkt (F) des gerichteten Graphen, auf dem sie berechnet (114) wird, als die Summe von Mindestkosten, um sich von dem Scheitelpunkt, auf dem sich der navigierende Agent (16) befindet, zum angenommenen Grenzscheitelpunkt (F) durch Navigieren in dem gerichteten Graphen zum angenommenen Scheitelpunkt zu begeben, und einer überschätzten heuristischen Kostenschätzung definiert wird, um sich von dem angenommenen Grenzscheitelpunkt (F) zum Ankunftsscheitelpunkt (14) zu begeben.

5. Verfahren (200) zur Steuerung einer Bewegung eines navigierenden Agenten (16) nach Anspruch 4, wobei die überschätzte heuristische Kostenschätzung der heuristischen Mindestkostenschätzung entspricht, die durch einen Multiplikationskoeffizienten gewichtet wird, der größer oder gleich "1" ist.

6. Verfahren (200) zur Steuerung einer Bewegung eines navigierenden Agenten (16) nach Anspruch 5, wobei der Multiplikationskoeffizient im Laufe der Navigation (300) oder zwischen zwei Navigationsetappen (300) variabel ist.

7. Verfahren (200) zur Steuerung einer Bewegung eines navigierenden Agenten (16) nach Anspruch 5 oder 6, wobei die überschätzte heuristische Kostenschätzung weiter durch einen zusätzlichen Multiplikationskoeffizienten gewichtet ist, der auf der Basis eines Winkelwertes definiert ist, der in Bezug auf die Referenzrichtung einer Achse ausgedrückt wird, die den angenommenen Grenzscheitelpunkt mit dem Ankunftsscheitelpunkt (14) verbindet, wobei dieser zusätzliche Multiplikationskoeffizient genauer definiert ist, um jede Navigation (300) in einer Richtung zu sanktionieren, die sich von der Referenzrichtung entfernt.

8. Verfahren (200) zur Steuerung einer Bewegung eines navigierenden Agenten (16) nach einem der Ansprüche 1 bis 7, wobei mindestens eine semantische Regel, die in Abhängigkeit von den Anwendungsbedürfnissen definiert wird, in die zweite heuristische Risikobewertung (114) einbezogen wird.

9. Verfahren (200) zur Steuerung einer Bewegung eines navigierenden Agenten (16) nach einem der Ansprüche 1 bis 8, wobei der Erkundungsschritt (400) jeder Iteration fortgesetzt wird, bis irgendein Scheitelpunkt des gerichteten Graphen erneut erreicht wird.

10. Verfahren (200) zur Steuerung einer Bewegung eines navigierenden Agenten (16) nach einem der Ansprüche 1 bis 9, wobei die aufeinanderfolgenden Schritte (100, 300, 400) wiederholt werden, bis der Ankunftsscheitelpunkt (14) erreicht ist oder der Planungsschritt (100) an dem Scheitelpunkt blockiert wird, an dem sich der navigierende Agent (16) befindet.

11. Aus einem Kommunikationsnetzwerk herunterladbares und/oder auf einem durch einen Computer lesbaren und/oder durch einen Prozessor ausführbaren Medium gespeichertes Computerprogramm (30, 32, 34), **dadurch gekennzeichnet, dass** es Anweisungen zur Ausführung der Schritte eines Verfahrens (200) zur Steuerung einer Bewegung eines navigierenden Agenten (16) nach einem der Ansprüche 1 bis 10 umfasst, wenn das Programm (30, 32, 34) durch einen Prozessor (26) ausgeführt wird.

12. System (20) zur Steuerung einer Bewegung eines navigierenden Agenten (16) in einer in einem Netzwerk (10) an Knoten und Verbindungen zwischen den Knoten organisierten, teilweise durch einen gerichteten Graphen repräsentierten Umgebung, wobei jeder Scheitelpunkt und jede Kante des gerichteten Graphen jeweils einem Knoten und einer Ausrichtung einer Verbindung des Netzwerks entspricht, wobei der gerichtete Graph ursprünglich eine Vielzahl von Scheitelpunkten, "Grenzscheitelpunkte" genannt, beinhaltet, aus jeder von denen sich mindestens eine Kante zu einem unbekannten Teil (U) des Netzwerks richtet, der nicht von dem gerichteten Graphen repräsentiert wird, wobei das System einen programmierten (30, 32, 34) Leitprozessor (22) zur Ausführung der Schritte eines Verfahrens (200) zur Steuerung einer Bewegung eines navigierenden Agenten (16) nach einem der Ansprüche 1 bis 10 beinhaltet.

## Claims

1. A method (200) for controlling a movement of an agent (16) moving within an environment organized into a network (10) of nodes and links between the nodes partially represented by a directed graph, wherein each vertex and edge of the directed graph corresponds respectively to a node and to an orientation of a link of the network, ,wherein the directed graph initially comprises a plurality of vertices, called "border vertices", from each of which at least one edge is directed towards an unknown portion (U) of the network not represented by the directed graph, the method comprising guiding of the moving agent (16) in its movement, between a starting vertex (12) and a destination vertex (14) in the directed graph, via execution by a processor of at least one iteration of the following successive steps:

   - planning (100) a path in the directed graph, between a vertex at which the moving agent (16) is located and the destination vertex (14) or a border vertex (F), via execution of a path-searching algorithm on the basis of a first heuristic evaluation of cost calculated (102, 120) for vertices of the directed graph and on the basis of a path search via a progressive increase in the cost (106),
   - controlling a navigation (300) of the moving agent (16) between the location at which it is located and the destination vertex (14) or the border vertex (F) returned by the planning step (100), and
   - after the navigation (300) and if the planning step (100) returns a border vertex (F) that is different from the destination vertex (14), controlling an exploration (400) in the unknown portion (U) of the network (10) with enrichment of the directed graph via the addition of the vertex or vertices and edge(s) explored,

   **characterized in that** the planning step (100) of each iteration comprises, for each calculation (102, 120) of the first heuristic evaluation of cost for a border vertex (F), an additional calculation (114) of a second heuristic evaluation of risk for this border vertex (F), and provides, as the destination of the path, the border vertex (F) for which the heuristic evaluation of risk calculated is the lowest as soon as (108) the cost exceeds this lowest heuristic evaluation of risk before the destination vertex (14) has been reached.

2. The method (200) for controlling a movement of a moving agent (16) as claimed in claim 1, wherein the planning step (100) of each iteration is executed on the basis of an implementation of the A* algorithm in which the first heuristic evaluation of cost is defined, for each considered vertex of the directed graph for which said evaluation is calculated (102, 120), as the sum of a minimum cost for going from the vertex at which the moving agent (16) is located to the considered vertex by navigating in the directed graph and a heuristic estimation of minimum cost for going from the considered vertex to the destination vertex (14).

3. The method (200) for controlling a movement of a moving agent (16) as claimed in claim 2, wherein the heuristic estimation of minimum cost is a distance expressed via the Euclidean norm between the considered vertex and the destination vertex (14).

4. The method (200) for controlling a movement of a moving agent (16) as claimed in claim 2 or 3, wherein the second heuristic evaluation of risk is defined, for each considered border vertex (F) of the directed graph for which said evaluation is calculated (114), as the sum of a minimum cost for going from the vertex at which the moving agent (16) is located to the considered border vertex (F) by navigating in the directed graph and a heuristic estimation of overestimated cost for going from the considered border vertex (F) to the destination vertex (14).

5. The method (200) for controlling a movement of a moving agent (16) as claimed in claim 4, wherein the heuristic estimation of overestimated cost corresponds to the heuristic estimation of minimum cost weighted by a multiplication coefficient greater than or equal to "1".

6. The method (200) for controlling a movement of a moving agent (16) as claimed in claim 5, wherein the multiplication coefficient is variable during navigation (300) or between two steps of navigations (300).

7. The method (200) for controlling a movement of a moving agent (16) as claimed in claim 5 or 6, wherein the heuristic estimation of overestimated cost is further weighted by an additional multiplication coefficient defined on the basis of an angular value expressed with respect to the reference direction of an axis connecting the considered border vertex to the destination vertex (14), wherein this additional multiplication coefficient is more specifically defined in such a way as to penalize any navigation (300) in a direction that moves away from the reference direction.

8. The method (200) for controlling a movement of a moving agent (16) as claimed in any one of claims 1 to 7, wherein at least one semantic rule defined according to the application needs is introduced into the second heuristic evaluation of risk (114).

9. The method (200) for controlling a movement of a moving agent (16) as claimed in any one of claims 1 to 8, wherein the exploration step (400) of each iteration is carried out until any vertex of the directed graph is again reached.

10. The method (200) for controlling a movement of a moving agent (16) as claimed in any one of claims 1 to 9, wherein said successive steps (100, 300, 400) are repeated until the destination vertex (14) is reached or the planning step (100) is blocked at the vertex at which the moving agent (16) is located.

11. A computer program (30, 32, 34) that can be downloaded from a communication network and/or is recorded on a medium readable by a computer and/or can be run by a processor, **characterized in that** it comprises instructions for executing the steps of a method (200) for controlling a movement of a moving agent (16) as claimed in any one of claims 1 to 10, when said program (30, 32, 34) is run by a processor (26).

12. A system (20) for controlling a movement of an agent (16) moving within an environment organized into a network (10) of nodes and links between the nodes partially represented by a directed graph, wherein each vertex and edge of the directed graph corresponds respectively to a node and to an orientation of a link of the network, wherein the directed graph initially comprises a plurality of vertices, called "border vertices", from each of which at least one edge is directed towards an unknown portion (U) of the network not represented by the directed graph, the system comprising a guide processor (22) programmed (30, 32, 34) for executing the steps of a method (200) for controlling a movement of a moving agent (16) as claimed in any one of claims 1 to 10.

## Figure 1

## Figure 2

## Figure 3

## *Figure 4*

200

202
↓
204
↓
208
↓
100
↓

300

302
↓
304
↓
306 → 206

400

402
↓
404
↓
406 →
↓
408
↓
410

## Figure 5A

## *Figure 5B*

# Figure 5C

## RÉFÉRENCES CITÉES DANS LA DESCRIPTION

**Littérature non-brevet citée dans la description**

- **DE KOENIG et al.** Fast replanning for navigation in unknown terrain. *IEEE Transactions on Robotics,* Juin 2005, vol. 21 (3), 354-363
- **DE ARGAMON-ENGELSON et al.** Utility-based on-line exploration for repeated navigation in an embedded graph. *Artificial Intelligence,* Mai 1998, vol. 101 (1-2), 267-284

- Interleaved versus a priori exploration for repeated navigation in a partially-known graph. **ARGAMON-ENGELSON S et al.** INTERNATIONAL JOURNAL OF PATTERN RECOGNITION AND ARTIFICIAL INTELLIGENCE (IJPRAI). WORLD SCIENTIFIC PUBLISHING, 01 Novembre 1999, vol. 13, 963-986
- PHA*: finding the shortest path with A* in an unknown physical environment. *Journal of Artificial Intelligence Research,* Juin 2004, vol. 21, 631-670